# EUROPEAN PATENT APPLICATION

(11) **EP 2 149 733 A2**
(43) Date of publication of application: **03.02.2010**
(21) Application number: 09305716.4
(22) Date of filing: 30.07.2009
(51) Int. Cl.: F16L 19/06, F16L 19/12, F16L 23/028, F16L 23/16, F16L 47/03, F16L 47/04

(54) **Packing means for sealing and connector for a pipe with the same**

(30) Priority: 30.07.2008 KR 20080074732
(71) Applicant: Kim,, Yong Jin, Yeongdeungpo-gu Seoul 150-103 (KR)
(72) Inventor: Kim,, Yong Jin, Yeongdeungpo-gu Seoul 150-103 (KR)
(74) Representative: Michelet, Alain

(57) **Abstract**

Provided is a packing means for sealing, comprising a base ring member (110,111); an upper ring member (112); and a lower ring member (113), wherein the base ring member has a projection line at the inner surface thereof so as to be not slide on an outer surface of the pipe (101) but fixed thereon when the base ring member (110,111) is closely contacted with the upper and lower ring member at the same time when being rotated by external force, and also has a rib line which is formed to traverse the projection line so that a depth to which the projection line is struck into the outer surface of the pipe is restricted, and the projection line is formed into a spiral or oblique-toothed structure so as to be struck in a desired depth into the outer surface of the pipe toward the lower ring member corresponding to the upper ring member.

## Description

### CROSS-REFERENCE(S) TO RELATED APPLICATIONS

The present invention claims priority of Korean Patent Application No. 10-2008-0074732, filed on July 30, 2008, which is incorporated herein by reference.

### BACKGROUND OF THE INVENTION

### Field of the Invention

The present invention relates to a packing means for sealing, which can be used as a cylindrical pipe passage such as a water supply and drain pipe, a rainwater pipe, a wire receiving pipe and a gas pipe, and a connector for a pipe with the same.

### Description of Related Art

In general, a pipe connecting technology for forming a pipe passage can be classified into a socket type, a heat shrink type and a fusion welding type which are typically and widely used.

However, as disclosed in Korean Patent No.0562782 issued by the applicant of the present invention, there are many disadvantages in the socket type, the heat shrink type and the fusion welding type. To overcome the disadvantages, the applicant has proposed a pipe connecting apparatus in the above-mentioned patent, which can facilely perform the pipe connecting operation and have high water tightness due to the tightly coupled and connected state and also reduce the work effort and cost.

The pipe connecting apparatus in Korean Patent No.0562782 will be described referring to Figs. 1 and 2.

The pipe connecting apparatus includes a pair of fixing members 30 and 40 which are fixedly fitted to each pipe, and a coupling member 50 which is coupled to one of the fixing members 30 and 40 and then coupled with the other fixing member.

A protrusion portion 42 is formed at an end of the first fixing member 40, and a concaved portion is formed at an end of the second fixing member 30. When connecting the first and second fixing members 40 and 30, the concaved portion 33 is closely inserted onto the protrusion portion 42.

Further, the second fixing member 30 has a first screw portion 31 on an outer surface thereof, and the coupling member 50 has a second screw portion 51 on an inner surface thereof. Thus, the first and second fixing members 40 and 30 are connected to each other by engagement of the screw portions 31 and 51.

Meanwhile, an O-ring member 60 is interposed between the first and second fixing members 40 and 30 so as to maintain the water and gas tightness.

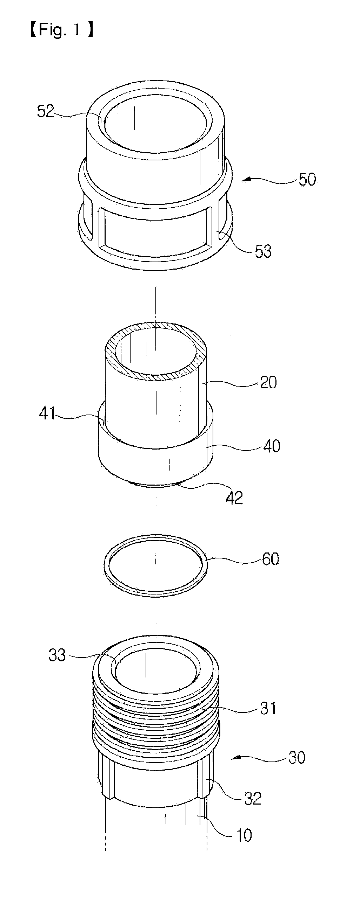

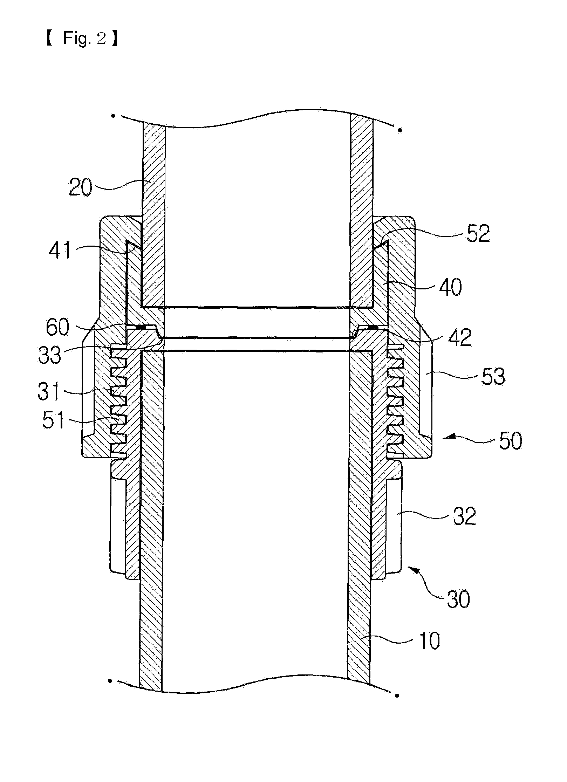

In the pipe connecting apparatus of Figs. 1 and 2, after the O-ring member 60 is interposed between the first and second members 40 and 30 that are respectively coupled to the pipes 10 and 20 corresponding to each other, the coupling member 50 caught by a flange portion 41 of the first fixing member 40 is rotated to be coupled with the second fixing member 30. At this time, the first screw portion 31 of the second fixing member 30 is screwed to the second screw portion 51 of the coupling member 50.

According to the pipe connecting apparatus disclosed in Korean Patent No.0562782, the connecting operation can be facilely performed compared with the conventional socket type, the heat shrink type and the fusion welding type, and it is possible to remarkably reduce the work effort and further reduce the cost.

Furthermore, according to the pipe connecting apparatus, it is possible to prevent a leakage of water at the connecting portion of the pipes, and particularly, although the quantity of water is suddenly increased upon a flood and thus a large pressure is applied to the pipes, it is possible to prevent bursting of the connecting portion and releasing of the connecting state.

Meanwhile, In case of all kinds of connecting apparatuses, when using the connecting apparatuses for a long time period, the connecting portions may be loosened and thus water may be leaked through the loosened connecting portion.

Especially, in case of the pipe connecting apparatus as described above, since it has a screw type pipe connecting structure, the connecting apparatus may be corroded, or the connecting portion thereof may be slowly released and loosened due to water pressure and the like, and thus water may be leaked through the loosened connecting portion.

### SUMMARY OF THE INVENTION

An embodiment of the present invention is directed to providing a packing means for sealing, which can prevent the leakage of water even though a connecting portion of pipes is corroded or loosened, and a connector for a pipe with the same, which can prevent the loosening of the connecting portion and maintain an initial coupling state of the pipes.

To achieve the object of the present invention, the present invention provides a packing means for sealing, comprising a base ring member which is inserted onto an outer surface of a pipe and of which an outer surface is formed with an upper inclined surface that is inclined upward and a lower inclined surface that is inclined downward; an upper ring member which is formed with an internal inclined surface to be closely contacted with the upper inclined surface of the base ring member; and a lower ring member which is formed with an internal inclined surface to be closely contacted with the lower inclined surface of the base ring member, wherein the base ring member has a projection line at the inner surface thereof so as to be not slide on an outer surface of the pipe but fixed thereon, when the base ring member is closely contacted with the upper and lower ring member at the same time when being rotated by external force, and also has a rib line which is formed to traverse the projection line so that a depth that the projection line is struck into the outer surface of the pipe is restricted, and the projection line is formed into a spiral or oblique-toothed structure so as to be struck in a desired depth into the outer surface of the pipe toward the lower ring member corresponding to the upper ring member.

Further, the present invention provides a pipe connecting apparatus, comprising a first coupling member which is coupled to an end of a first pipe and a second coupling member which is coupled to an end of a second pipe so as to connect the first and second pipes, wherein the first coupling member has a screw portion which is formed at an outer surface thereof to be screwed with the second coupling member, and an operating portion which is formed at a rear side of the screw portion and grasped and rotated by a user's hand so as to apply a rotational pressure when the first coupling member is coupled with the second coupling member, and the second coupling member has a screw portion which is formed at an inner surface thereof to be screwed with the first coupling member and an operating portion which is grasped and rotated by a user's hand so as to apply a rotational pressure when the first coupling member is coupled with the second coupling member, and the second coupling member is rotatably disposed to be coupled with the first coupling member in a state of being caught by a sealing means fixed to the second pipe as the packing means according to any one of claims 1 to 4, and when the second coupling is rotated, the packing means receives rotational force through surface contact with the inner surface of the second coupling member to be rotated by a desired angle in the same direction as a rotational direction of the second coupling member and then fixed to the outer surface of the second pipe.

According to the packing means for sealing and the pipe connecting apparatus with the same of the present invention, although the connecting portion of the pipes may be corroded, or the pipe connecting apparatus may be loosened, it is possible to prevent a leakage of water.

Particularly, the base ring member forming the packing means has the projection line, and the projection line 111a is formed into a spiral or oblique-toothed structure so as to be struck in a desired depth into the outer surface of the pipe.

Therefore, if the packing means including the base ring member is applied to the pipe connecting apparatus in order to connect the first and second pipes, the packing means (specially, the base ring member) is rotated by a desired angle in the same direction as a rotational direction of the second coupling member and then stably fixed between the second pipe and the pipe connecting apparatus, while being closely contacted or engaged with the second coupling member, thereby enhancing the water tightness. This is caused by that the base ring member is struck into the outer surface of the second pipe so that the packing means can be firmly fixed to the second pipe.

### BRIEF DESCRIPTION OF THE DRAWINGS

Fig. 1 is an exploded perspective view showing an example of a conventional pipe connecting apparatus.

Fig. 2 is a cross-sectional view of Fig. 1.

Figs. 3 to 5 are views showing a packing means for sealing and a coupling state thereof in accordance with an embodiment of the present invention.

Fig. 6 is a view showing other coupling state in accordance with another embodiment of the present invention.

Figs. 7 to 9 are views showing a pipe connecting apparatus in accordance with an embodiment of the present invention.

Figs. 10 to 11 are views showing a using state of the pipe connecting apparatus of Figs. 7 to 9.

Fig. 12 is a view showing other coupling state modified from that of Fig. 9.

Fig. 13 is a view showing another coupling state modified from that of Fig. 12.

Fig. 14 is a view showing another base ring member modified from that of Figs. 3 to 6.

Fig. 15 is a view showing yet another base ring member modified from that of Fig. 14.

Figs. 16 to 18 are views showing a closely contacting structure between the base ring member of the packing means and a second coupling member in the pipe connecting apparatus in accordance with the present invention.

Fig. 19 is a cross-sectional view showing the pipe connecting apparatus in accordance with a second embodiment of the present invention.

Fig. 20 is an exploded perspective view showing another type of the pipe connecting apparatus in accordance with the second embodiment of the present invention.

Fig. 21 is a cross-sectional view of the assembled pipe connecting apparatus of Fig. 20.

Fig. 22 is a cross-sectional view showing yet another type of the pipe connecting apparatus in accordance with the second embodiment of the present invention.

Fig. 23 is a perspective view of a fixing member in accordance of the second embodiment of the present invention.

Fig. 24 is a cross-sectional view showing the pipe connecting apparatus in accordance of a third embodiment of the present invention.

Fig. 25 is an exploded perspective view showing another type of the pipe connecting apparatus in accordance with the third embodiment of the present invention.

Fig. 26 is a cross-sectional view of the assembled pipe connecting apparatus of Fig. 25.

Fig. 27 is a cross-sectional view showing the pipe connecting apparatus in accordance with a fourth embodiment of the present invention.

Fig. 28 is a cross-sectional view showing another type of the pipe connecting apparatus in accordance with the fourth embodiment of the present invention.

Fig. 29 is a cross-sectional view showing the pipe connecting apparatus in accordance with a fifth embodiment of the present invention.

Fig. 30 is a cross-sectional view showing another type of the pipe connecting apparatus in accordance with the fifth embodiment of the present invention.

Fig. 31 is a cross-sectional view showing yet another type of the pipe connecting apparatus in accordance with the fifth embodiment of the present invention.

Fig. 32 is a cross-sectional view showing yet another type of the pipe connecting apparatus in accordance with the fifth embodiment of the present invention.

### DESCRIPTION OF SPECIFIC EMBODIMENTS

The advantages, features and aspects of the invention will become apparent from the following description of the embodiments with reference to the accompanying drawings, which is set forth hereinafter.

**(Packing means for sealing)**

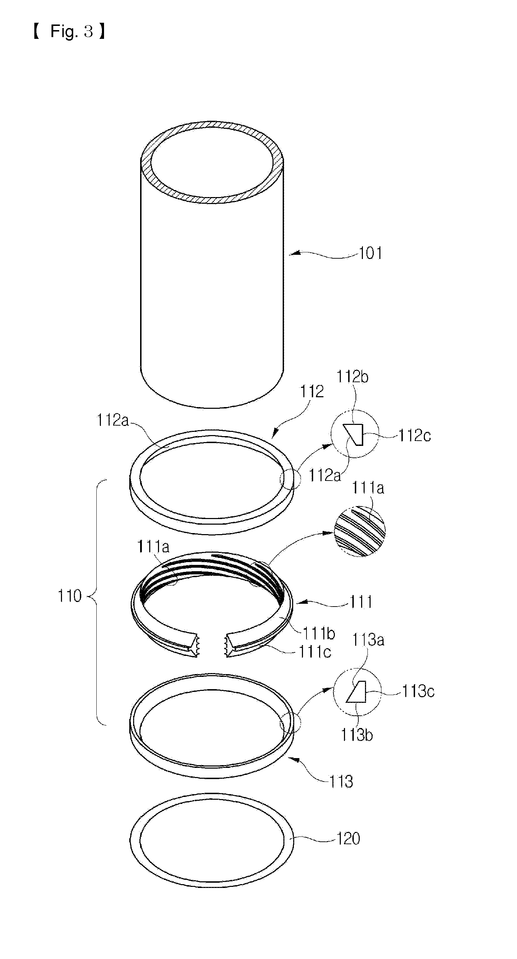

Figs. 3 to 5 are views showing a packing means for sealing and a coupling state thereof in accordance with an embodiment of the present invention.

Referring to Figs. 3 to 5, a packing means of the present invention includes a base ring member 111 which is inserted onto an outer surface of a pipe 101 and of which an outer surface is formed with an upper inclined surface 111b that is inclined upward and a lower inclined surface 111c that is inclined downward, an upper ring member 112 which is formed with an internal inclined surface 112a to be closely contacted with the upper inclined surface 111b of the base ring member 111, and a lower ring member 113 which is formed with an internal inclined surface 113a to be closely contacted with the lower inclined surface 111c of the base ring member 111.

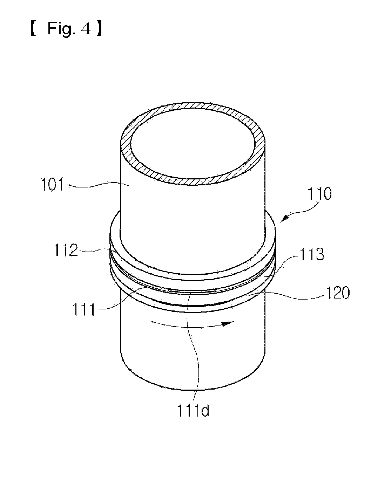

In the packing means of the present invention, a part of an inner surface of the base ring member has a cut-off portion (111d: referring to Figs. 3 and 4) so as to be closely contacted with an outer surface of the pipe 101 when the upper ring member 112 and the lower ring member 113 are respectively contacted with the upper and lower inclined surfaces 111b and 111c at the same time when the base ring member 111 is rotated by external force (referring to an arrow mark of Fig. 4).

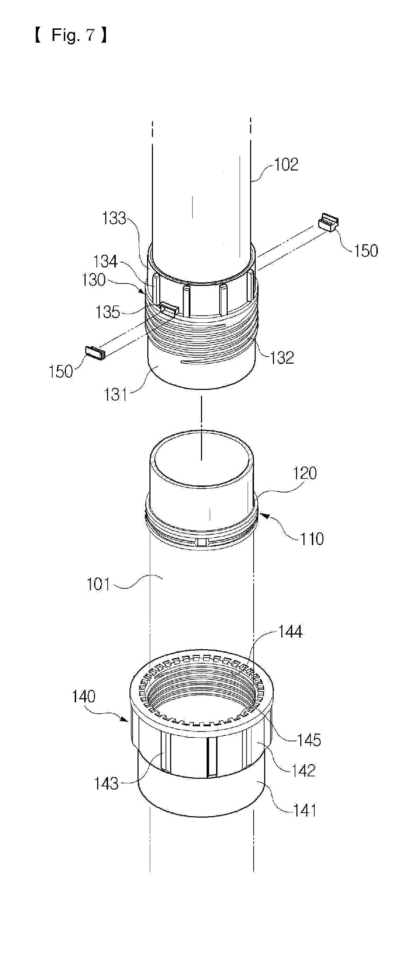

Herein, "the rotation due to the external force" may mean that the packing means is rotated by a desired angle in the same direction as a rotational direction of the second coupling member 140 due to surface contact with an inner surface of the second coupling member 140(referring to Figs. 7, 9 and 13) when the packing means is applied to the pipe connecting apparatus to be described later and then first and second pipes 102 and 101 are connected through first and second coupling members 130 and 140.

As another embodiment of "the rotation due to the external force", it is preferable that a surface of the base ring member 111 contacted with the external force is formed into a shape corresponding to a means for providing the external force, or formed of a material having viscosity with respect to the means for providing the external force.

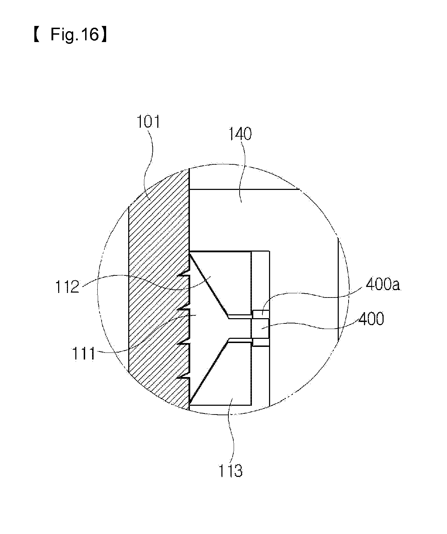

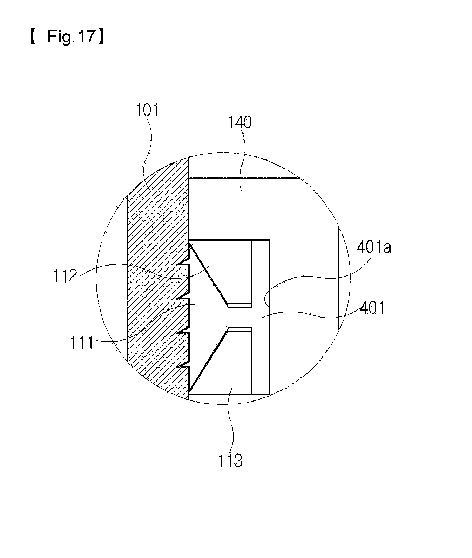

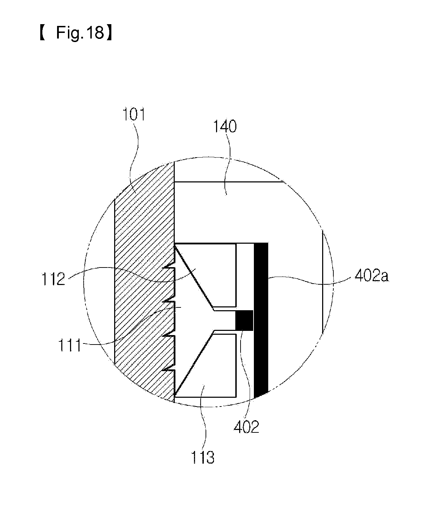

Preferably, the shape corresponding to the means for providing the external force is a concaved and convexed shape (a concavo-convex portion: 400) which can be engaged with the means (second coupling member (140)) for providing the external force, as shown in Fig. 16, or an expanded shape (an expanded portion: 401) which can increase a contact surface area with the means for providing the external force, as shown in Fig. 17, and the material (a viscous portion: 402) having viscosity with respect to the means for providing the external force includes rubber, urethane, silicon and the like, as shown in Fig. 18.

In other words, as shown in Fig. 16, the inner surface of the second coupling member 140 has a concaved and convexed shape (a concavo-convex portion: 400a), and the concaved and convexed shape (the concavo-convex portion: 400) of the base ring member 111 is engaged with that of the second coupling member 140, and thus the base ring member 11 can be rotated by a desired angle in the same direction as the rotational direction of the second coupling member 140.

As described above, since the base ring member 111 is rotated together with the second coupling member 140, the base ring member 111 is tightly contacted with the second coupling member 140 together with the upper and lower ring members 112 and 113, thereby enhancing the water tightness.

In case that an inner surface 401a of the second coupling member 140 is closely contacted with the expanded surface 401 of the base ring member 111, as shown in Fig. 17, since the surface area contacted with the inner surface 401 a of the second coupling member 140 is increased by the expanded surface 401, the base ring member 111 can be rotated by a desired angle in the same direction as the rotational direction of the second coupling member 140.

In this case, since the base ring member 111 is rotated together with the second coupling member 140, the base ring member 111 is tightly contacted with the second coupling member 140 together with the upper and lower ring members 112 and 113, and thus it is possible to enhance the water tightness.

In case that a viscous material (a viscous portion (402a)) is provided at the inner surface of the second coupling member 140, as shown in Fig. 18, the corresponding viscous portion 402 of the base ring member 111 is closely contacted with the viscous portion 402a of the second coupling member 140 due to the adhesive power between the viscous portions 402 and 402a, and thus the base ring member 111 can be rotated by a desired angle in the same direction as the rotational direction of the second coupling member 140.

In this case, since the base ring member 111 is rotated together with the second coupling member 140, the base ring member 111 is tightly contacted with the second coupling member 140 together with the upper and lower ring members 112 and 113, and thus it is possible to enhance the water tightness.

In addition, the base ring member 111 has a projection line 111a at the inner surface thereof so as to be not slide on the outer surface of the pipe 101 but fixed thereon, when the base ring member 111 is closely contacted with the upper and lower ring member 112 and 113 at the same time when being rotated by the external force.

In the embodiment, the projection line 111a is formed into a spiral-toothed structure so as to be struck in a desired depth into the outer surface of the pipe 101 toward the lower ring member 113 corresponding to the upper ring member 112.

Preferably, in order to allow the projection line 111a to be struck into the outer surface of the pipe 101, the projection line 111a of the base ring member 111 is formed of a material having a higher rigidity than the pipe 101.

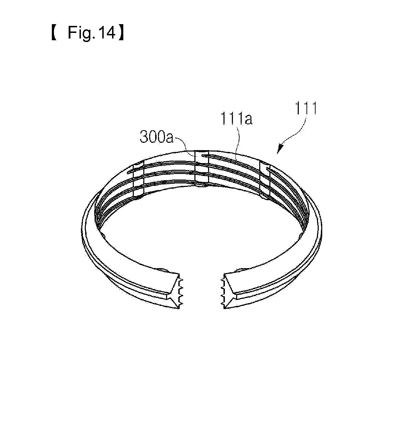

Meanwhile, as shown in Fig. 14, the inner surface of the base ring member 111 is further formed with a plurality of rib lines 300a which are formed to traverse the projection line 111a toward the lower ring member 113 corresponding to the upper ring member 112 and also have a lower height than the projection line 111a.

The rib lines 300a functions to restrict the depth that the projection line 111a is struck into the outer surface of the pipe 101 toward the lower ring member 113 corresponding to the upper ring member 112.

In other words, when the projection line 111a is struck into the outer surface of the pipe 101, the projection line 111a can be struck into the outer surface of the pipe 101 only until the rib line 300a is contacted with the outer surface of the pipe 101.

Due to such function of the rib line 300a, it is efficiently prevented that the base ring member is inclined to one side and then fixed on the pipe 101 or the projection line 111a is damaged and thus the projection line 111a is not reliably fixed to the pipe 101.

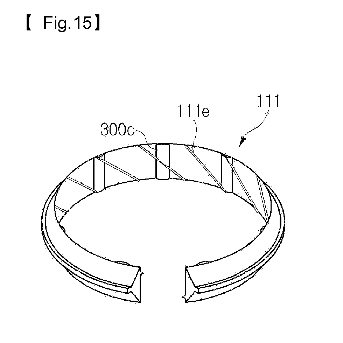

Meanwhile, as shown in Fig. 15, the projection line 111e of the base ring member 111 may be formed into an oblique-toothed structure so as to be struck in a desired depth into the outer surface of the pipe 101 toward the lower ring member 113 corresponding to the upper ring member 112.

The projection line 111e having the oblique-toothed structure shows the same effect as that having the spiral-toothed structure.

A reference numeral 300c designates a rib line having the same function and effect as the rib line 300a.

Preferably, outer surfaces 112b, 112c, 113b and 113c of the upper and lower ring members 112 and 113 corresponding to each inner inclined surface 112a, 113a are formed to be meet at right angles so that the outer surfaces 112b, 112c, 113b and 113c form a square when the upper and lower ring members 112 and 113 are closely contacted with the upper and lower inclined surfaces 111b and 111c.

According to the present invention, an O-ring 120 may be further provided at the outer surface of the pipe 101.

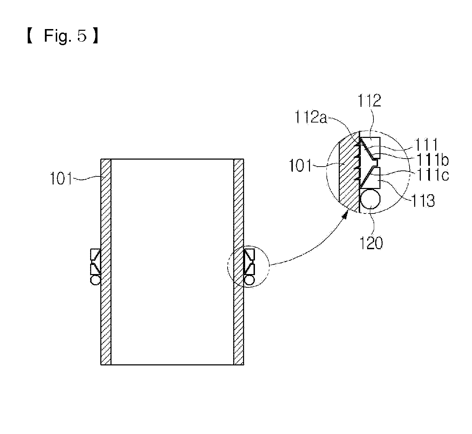

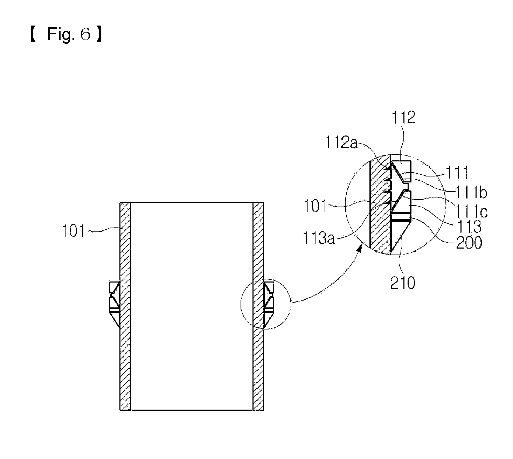

Fig. 6 is a view showing other coupling state that is different from that of Fig. 5, wherein a supplementary ring 200 for controlling a tolerance and a reinforcement ring 210 are further provided in turn at the outer surface of the pipe 101.

The supplementary ring 200 is formed of various hard materials such as rigid metal and plastic, and the reinforcement ring 210 is formed of various soft materials such as rubber and urethane.

**(Pipe connecting apparatus)**

First embodiment

Figs. 7 to 9 are views showing a pipe connecting apparatus in accordance with an embodiment of the present invention.

According to the embodiment of the present invention as shown in Figs. 7 to 9, a pipe connecting apparatus includes a first coupling member 130 which is coupled to an end of a first pipe 102 and a second coupling member 140 which is coupled to an end of a second pipe 101 so as to connect the first and second pipes 102 and 101. The first coupling member 130 has a screw portion 132 which is formed at an outer surface thereof to be screwed with the second coupling member, and an operating portion 133 which is formed at a rear side of the screw portion 132 and grasped and rotated by a user's hand so as to apply a rotational pressure to the first coupling member 130 when the first coupling member 130 is coupled with the second coupling member 140. And the second coupling member 140 has a screw portion 144 which is formed at an inner surface thereof to be coupled to the first coupling member 130 and an operating portion 142 which is grasped and rotated by a user's hand so as to apply a rotational pressure to the second coupling member 140 when the first coupling member 130 is coupled with the second coupling member 140. The second coupling member 140 is rotatably disposed to be coupled with the first coupling member 130 in a state of being caught by the packing means 110 fixed to the second pipe 101.

According to the pipe connecting apparatus according to the present invention, when the second coupling 140 is rotated, the packing means 110 receives rotational force through surface contact with the inner surface of the second coupling member 140 to be rotated by a desired angle in the same direction as a rotational direction of the second coupling member 140 and then fixed to the outer surface of the second pipe 101.

For example, the packing means 110 is rotated by a desired angle in the same direction as the rotational direction of the second coupling member 140 due to the surface contact with the second coupling member 140, and thus, as shown in Figs. 3 to 6, the base ring member 111 forming the packing means 110 is struck into the outer surface of the pipe 101 (in the embodiment, the second pipe 101) by using the projection line 111a having the spiral-toothed structure, while the upper ring member 112 and the lower ring member 113 are coupled to the upper and lower inclined surface 111b and 111c, or as shown in Figs. 3 and 5, the base ring member 111 is fixedly struck into the outer surface of the second pipe 101 using the projection line 111a by using the projection line 111a, while being closely contacted with an outer ring member 115.

In the base ring member 111 having the above-mentioned structure and operation, since the base ring member 111 can be further tightly contacted with the second pipe 101, the upper ring member 112, the lower ring member 113 and the outer ring member 115 forming the packing means 110 can be further stably supported to both sides or one side of the base ring member 111, and thus the entire packing means 110 can be stably fixed between the second pipe 101 and the pipe connecting apparatus so that the packing means 110 has the excellent water tightness at the internal portion of the pipe connecting apparatus.

According to the pipe connecting apparatus of the present invention, the contact surface contacted with the base ring member 111 of the packing means is preferably formed into one of a concaved and convexed shape (Fig. 16: 400a), an expanded shape (Fig. 17: 401a) and a viscous portion (Fig. 18: 402a).

The shape and material of the inner surface of the second coupling member 140 is to provide the rotational force to the base ring member 111.

The coupling relationship and the principle of transferring the rotational force between the inner surface of the second coupling member 140 and the base ring member 111 was described in the embodiment of the packing means, and thus the descriptions thereof will be omitted (referring to Figs. 16 and 18).

If other components 112, 113 and 115 including the base ring member 111 are tightly contacted with the inner surface of the second coupling member 140, they can be rotated together with the rotation of the second coupling member 140, but they are not spaced apart from each other, and thus the additional component for improving the water tightness, for example, the O-ring 120, the supplementary ring 200 and the reinforcement ring 210 can be further closely contacted, thereby securing the water tightness.

In the drawings, it is possible to confirm the above-mentioned effects of the pipe connecting apparatus of the present invention.

Meanwhile, according to the pipe connecting apparatus of the present invention, a grasping protrusion 134, 143 is formed at each of the operating portions 133 and 142 so as to apply the rotational pressure to each coupling member 130, 140.

In order to maintain the caught state by the packing means 110 fixed to the end of the second pipe 101, a catching protrusion 141a is formed at an end of the second coupling member 140 corresponding to the operating portion 142.

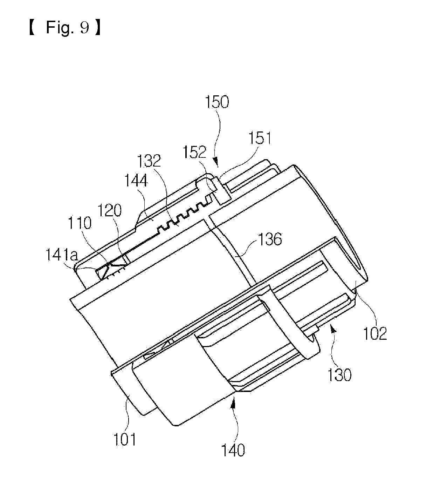

A reference numeral 136 which is not described in Fig. 9 is a protruded end.

According to the pipe connecting apparatus of the present invention, in order to prevent the first and second coupling members 130 and 140 from being released from each other, a locking key 150 is provided at an outer surface of the first coupling member 130, and a locking protrusion 145 is formed at an upper end of an outer surface of the second coupling member 140 so as to maintain a locked state with the locking key 150.

The locking key 150 includes a sliding surface 153a which allows the locking protrusion 145 to be slidingly rotated in a locking direction when the first and second coupling members 130 and 140 are coupled to each other, and a catching surface 153c which is formed at a position corresponding to the sliding surface 153a to prevent the locking protrusion 145 from being rotated in a releasing direction.

In the present invention, the sliding surface 153a and the catching surface 153c are integrally formed at one side of the locking key 150.

Furthermore, in the pipe connecting apparatus of the present invention, the first coupling member has a fitting groove 135 at a boundary portion of the operating portion 133 and the screw portion 132 so that the locking key 150 is fixedly inserted therein. The locking key 150 includes a '⊏'-shaped elastic portion 152 that is formed at a lower side of the sliding surface 153a and the catching surface 153c so as to be inserted into the fitting groove 135, and a pushing portion 151 that is formed at an upper side of the sliding surface 153a and the catching surface 153c so as to press the elastic portion and release the caught state of the locking protrusion 145 and the catching surface 153c.

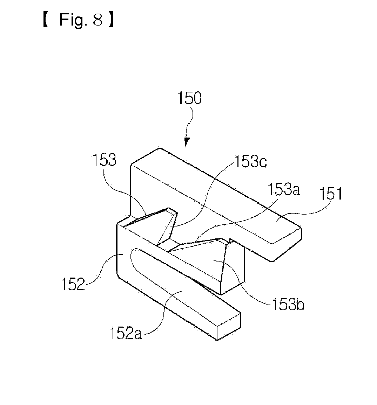

Meanwhile, a reference numeral 152a that is not described in Fig. 8 is a supporting end, and a reference numeral 153 is a protrusion end, and 153b is an inclined surface.

Hereinafter, the pipe connecting apparatus with the packing means of the present invention will be described (referring to Figs. 3 to 5).

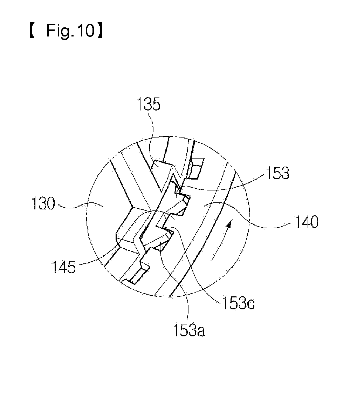

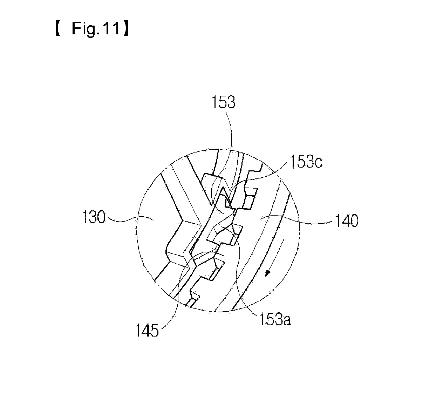

Figs. 10 to 11 are views showing a using state of the pipe connecting apparatus of Figs. 7 to 9, wherein Fig. 10 shows the coupling state of the pipe connecting apparatus, i.e., the locking process of the locking key of the Fig. 8, and Fig. 11 shows the released state of the pipe connecting apparatus, i.e., the releasing process of the pipe connecting apparatus from the locking state of Fig. 10 by an operation of the locking key.

First of all, the pipe connecting apparatus can be coupled by respectively rotating the first and second coupling members 130 and 140 in a locking direction relative to each other, as shown in the structure of Fig. 7. At this time, since the locking key 150 is fixedly inserted into the fitting groove 135 of the first coupling member 130, the locking protrusion 145 is slid along the sliding surface 153a of the protrusion end 153 in the locking direction due to the rotation of the second coupling member. On the other hand, in the coupling state of the pipe connecting apparatus, as shown in Fig. 10, since the locking state is maintained with respect to the catching surface 153c of the locking key 150 at the same time when the locking protrusion 145 is moved along the sliding surface 153a, it is prevented that the first and second coupling members 130 and 140 are separated from each other.

The releasing process of the pipe connecting apparatus of Fig. 11 is performed by pressing down the pushing portion 151 of the locking key 150 in the locking state and then respectively rotating the first and second coupling members 130 and 140 in a releasing direction relative to each other. In this case, if the pushing portion 151 of the locking key 150 is pushed down, the elastic portion 152 (Fig. 8) is pressed and the protrusion end 153 is descended to the supporting end 152, and thus, as shown in Fig. 11, the caught state of the locking protrusion 145 due to the catching surface 153c is released so that the first and second coupling members 130 and 140 can be separated from each other.

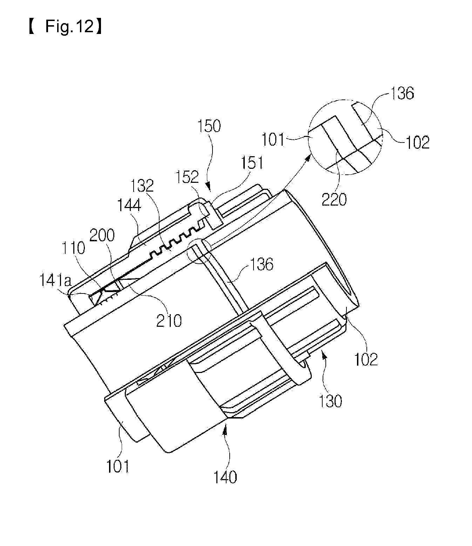

Fig. 12 is a view showing other coupling state modified from that of Fig. 9.

Unlike the above-mentioned embodiment (referring to Fig. 9), this embodiment shown in Fig. 12 employs the packing means of Fig. 6. The first coupling member 130 is fusion-welded to the first pipe 102 and further includes a projected end 136 which is projected in a desired length toward the inner surface of the first coupling member 130 so as to support the end of the first pipe 102.

In order to compensate a tolerance generated at the sealing means when coupling the first and second pipes 102 and 101, at lease one or more O-rings 220 having desired elastic force are further provided between the projected end 136 and the second pipe 101.

In the embodiment, when the first and second coupling members 130 and 140 are respectively rotated in the locking direction of the screw portions 132 and 144 relative to each other, the packing means 110 may be moved in a desired distance and then no more moved in the locking direction at a certain moment by a tooth of the base ring member 111 (referring to Figs. 3 to 5). Even in this case, since the supplementary ring 200 is effectively and closely contacted with the reinforcement ring 210, the tolerance is removed, and also the O-ring 220 provided between the projected end 136 and the second pipe 101 functions to remove the tolerance between the projected end 136 and the second pipe 101.

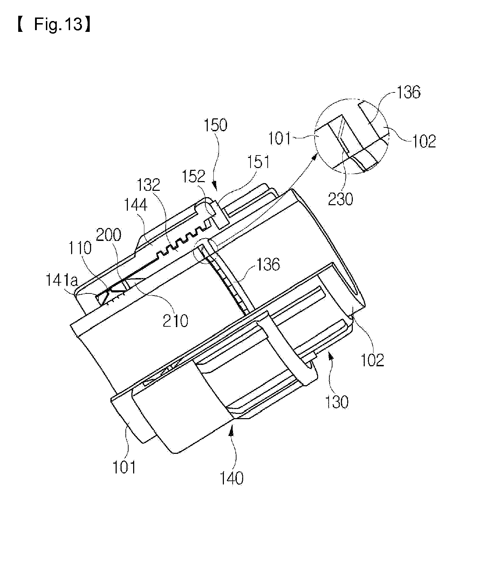

Fig. 13 is a view showing another coupling state modified from that of Fig. 12.

As shown in Fig. 13, this embodiment employs the packing means of Fig. 6. The first coupling member 130 is fusion-welded to the first pipe 102 and further includes a projected end 136 which is projected in a desired length toward the inner surface of the first coupling member 130 so as to support the end of the first pipe 102 and provided with a plurality of bent bodies 230 which are respectively bent toward the second pipe 101.

In order to compensate a tolerance generated at the sealing means when coupling the first and second pipes 102 and 101, the bent bodies 230 function to elastically support the end of the second pipe 101.

Like the embodiment of Fig. 12, in the embodiment, when the first and second coupling members 130 and 140 are respectively rotated in the locking direction of the screw portions 132 and 144 relative to each other, the packing means 110 may be moved in a desired distance and then no more moved in the locking direction at a certain moment by a tooth of the base ring member 111 (referring to Figs. 3 to 5). Even in this case, since the supplementary ring 200 is effectively and closely contacted with the reinforcement ring 210, the tolerance is removed, and also the bent bodies 230 provided between the projected end 136 and the second pipe 101 functions to effectively remove the tolerance between the projected end 136 and the second pipe 101.

Second embodiment

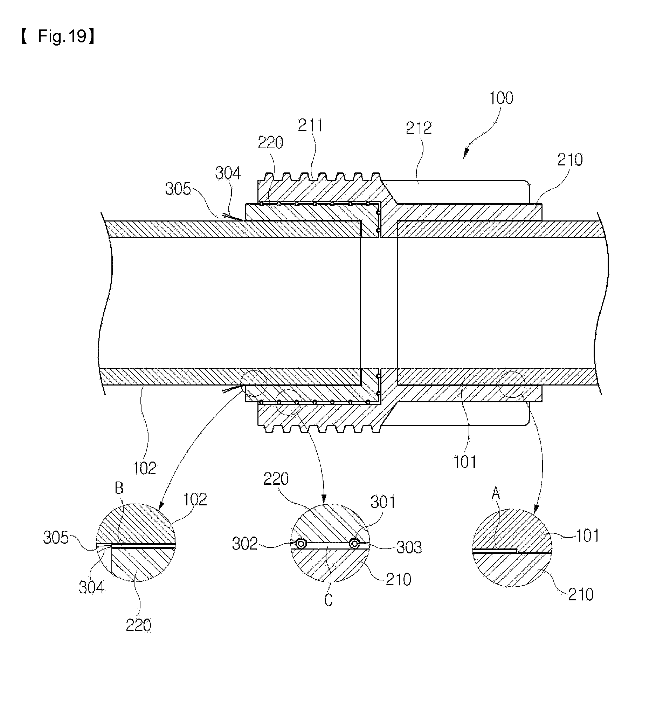

Figs. 19 to 22 are views of the pipe connecting apparatus in accordance with a second embodiment of the present invention. The pipe connecting apparatus 100 is to connect one pipe 101 and the other pipe 102 while securing the air-tightness therebetween.

The pipe connecting apparatus 100 includes a reference member 210 and a fixing member 220.

An inner surface of the reference member 210 is fixed to an outer surface of one pipe in a thermal welding method, and a reference numeral A shows a thermal-welded portion.

Preferably, a screw portion 211 is formed at an outer surface of the reference member 210, and an operating portion 212 is formed to be adjacent to the screw portion 211.

The fixing member 220 is interposed between the inner surface of the reference member 210 and an outer surface of the other pipe. Preferably, an inner surface of the fixing member 220 is fixed to the outer surface of the other pipe.

Fig. 19 is a cross-sectional view showing the pipe connecting apparatus in accordance with a second embodiment of the present invention. As shown in Fig. 19, the pipe connecting apparatus 100 includes the reference member 210 and the fixing member 220.

In the embodiment, the inner surface of the fixing member 220 is fixed to an end of the other pipe 102 along the outer surface thereof in a thermal welding method, and a reference numeral B shows a thermal-welded portion.

The outer surface of the fixing member 220 is fixed at a center portion of the inner surface of the reference member 210 toward the other pipe 102 in an electric heat welding method, and a reference numeral C shows a thermal-welded portion.

Herein, the electric heat welding method is performed as follows: firstly, a spiral groove 301 is formed at the outer surface of the fixing member 220, and then an electric wire 303 coated with a covering material 302 of synthetic resin is wound a few times on the spiral groove 301.

Both ends 304 and 305 of the electric wire 303 wound on the spiral groove 301 are electrically connected with an over-current applying device (not shown). Then, if current is applied to the electric wire 303 from the over-current applying device, the covering material of synthetic resin is melted and the fixing member 220 is firmly fixed to the other pipe 102.

In the embodiment, since fine clearances between the reference member 210 and the fixing member 220 are completely sealed by the thermal welding and the electric heat welding, it is surely prevented that fluid flowing through the pipes 101 and 102 is leaked to the outside.

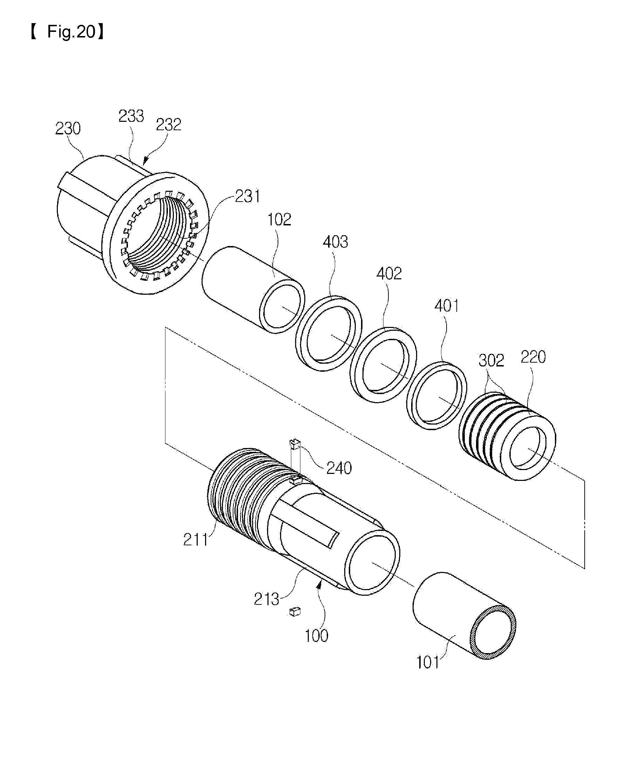

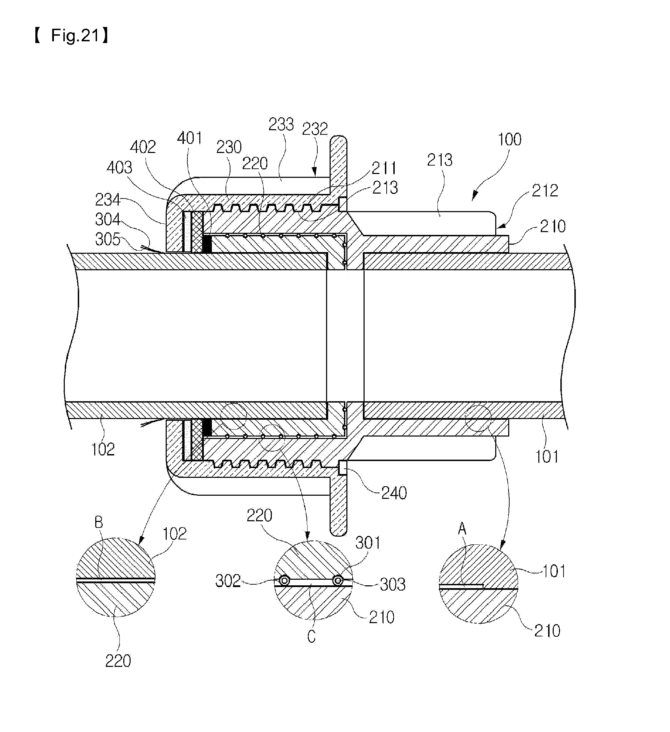

Fig. 20 is an exploded perspective view showing another type of the pipe connecting apparatus in accordance with the second embodiment of the present invention, and Fig. 21 is a cross-sectional view of the assembled pipe connecting apparatus of Fig. 20.

As shown in Figs. 20 and 21, the pipe connecting apparatus 100 includes the reference member 210, a first fixing member 220A and a second fixing member 220B.

An inner surface of the first fixing member 220A is fixed to an end of one pipe 101 along the outer surface thereof in a thermal welding method, and an outer surface of the first fixing member 220A is fixed at a center portion of the inner surface of the reference member 210 toward the pipe 101 in an electric heat welding method. An inner surface of the second fixing member 220B is fixed to an end of the other pipe along the outer surface thereof in the thermal welding method, and an outer surface of the second fixing member 220B is fixed at a center portion of the inner surface of the reference member 210 toward the other pipe 102 in the same electric heat welding method as that in the first fixing member 220A. A reference numeral A shows a thermal-welded portion.

The embodiment of the present invention further includes a first coupling member 230A and a second coupling member 230B which are respectively screwed to one side and the other side of the reference member 210.

Preferably, the first and second coupling members 230A and 230B are rotatably disposed to be coupled with both sides of the reference member 210 in a state of being caught by the packing means 401, 402 and 403 that are respectively fixed to the outer surfaces of the pipes 101 and 102.

The structure and operation of the packing means 401, 402 and 403 are the same as the packing means 111, 112 and 113 of the first embodiment.

Each of the first and second coupling members 230A and 230B includes a screw portion 231A and 231B that is formed at an inner surface of each of the first and second coupling members 230A and 230B so as to be screwed to the screw portion 211A and 211B of the reference member 210, and an operating portion 232A, 232B which is grasped and rotated by a user's hand so as to apply a rotational pressure when they are coupled with the reference member 210.

Preferably, a grasping protrusion 213, 233A, 233B is formed at each operating portion 212, 232A, 232B of the reference member 210 and the first and second coupling members 230A and 230B so as to apply the rotational pressure.

In order to maintain the caught state by the packing means 401, 402 and 403, a catching protrusion 234A, 234B is formed at an end of each of the first and second coupling members 230A and 230B corresponding to the operating portion 232A, 232B.

In order to prevent the reference member 210 and the first and second coupling members 230A and 240B from being released from each other, a locking key 240 (referring to Fig. 16) is provided at an outer surface of the reference member 210, and a locking protrusion (not shown) is formed at an upper end of an outer surface of each of the first and second coupling members 230A and 240B so as to maintain a locked state with the locking key 240.

The locking key 240 has the same structure as that of the first embodiment, and thus its description will be omitted.

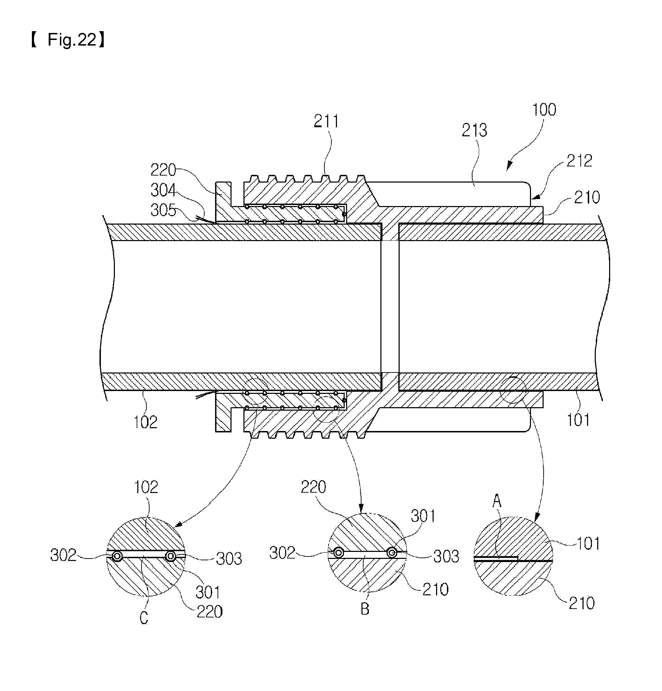

Fig. 22 is a cross-sectional view showing yet another type of the pipe connecting apparatus in accordance with the second embodiment of the present invention. As described in the drawing, the pipe connecting apparatus 100 of the present invention includes the reference member 210 and the fixing member 220.

In the embodiment, the inner and outer surface of the fixing member 220 are fixed to the outer surface of the other pipe 102 and the inner surface of the reference member 210 in an electric heat welding method, and reference numerals B and C thermal-welded portions.

The electric heat welding method is performed as follows:

Firstly, a spiral groove 301 is formed at the inner and outer surfaces of the fixing member 220, and then an electric wire 303 coated with a covering material 302 of synthetic resin is wound a few times on the spiral groove 301 formed at the inner and outer surfaces of the fixing member 220.

Both ends 304 and 305 of the electric wire 303 wound on the spiral groove 301 are electrically connected with an over-current applying device (not shown).

Then, if current is applied to the electric wire 303 from the over-current applying device, the covering material of synthetic resin is melted and the fixing member 220 is firmly fixed to the other pipe 102 and the reference member 210.

In the embodiment, since fine clearances between the reference member 210 and the fixing member 220 are completely sealed by the electric heat welding, it is surely prevented that fluid flowing through the pipes 101 and 102 is leaked to the outside.

The embodiment is the most suitable for a water supply and drain pipe, and a gas pipe, and it is preferable that the pipe 101, 102 has a diameter of 16 ∼ 600mm.

The pipe 101, 102 is preferably formed of a synthetic resin material, more preferably, polyethylene.

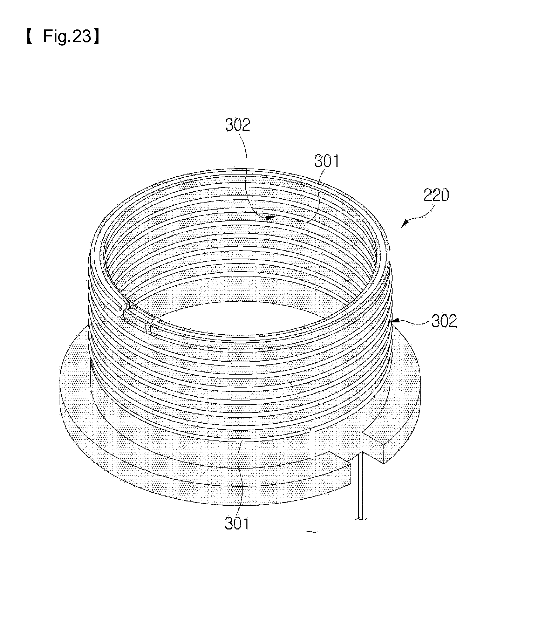

Fig. 23 is a perspective view of the fixing member 220 in accordance of the second embodiment of the present invention, wherein the arrangement of the spiral groove 301 formed at the outer and inner surfaces of the fixing member 220, and the electric wire (not shown: referring to 303 of Fig. 22) coated with the covering material 302 is clearly illustrated.

Third embodiment

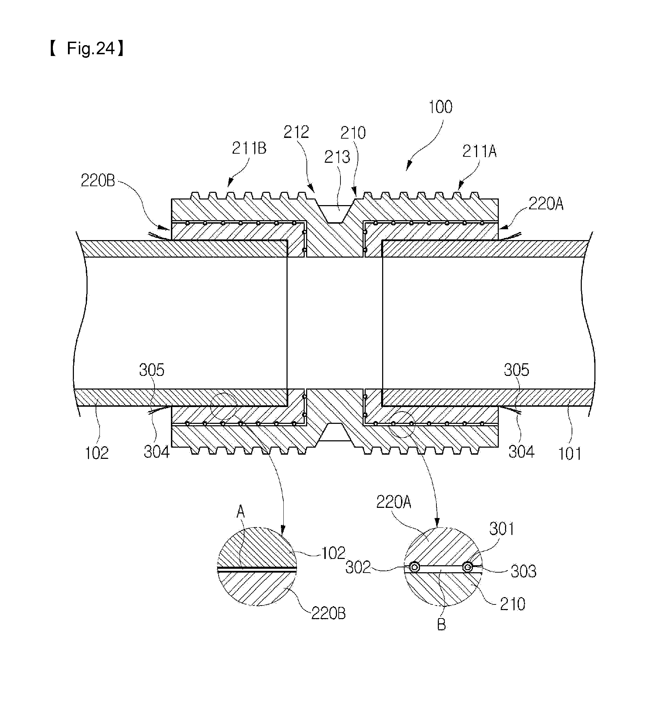

Figs. 24 to 26 are views of the pipe connecting apparatus in accordance with a second embodiment of the present invention. The pipe connecting apparatus 100 is to connect one pipe 101 and the other pipe 102 while securing the air-tightness therebetween.

The pipe connecting apparatus 100 according to the embodiment of the present invention includes a reference member 210 and a first fixing member 220A and a second fixing member 220B.

The reference member 210 has a symmetrical shape with respect to a connecting portion of the pipes 101 and 102.

Preferably, an operating portion 212 for grasping the reference member 210 is formed at the outer surface of the reference member 210, and first and second screw portions 211A and 211B are formed at both sides of the operating portion 212.

The first fixing member 220A is interposed between one side of the inner surface of the reference member 210 and the outer surface of one pipe 101. Preferably, the inner surface of the first fixing member 220A is fixed to the outer surface of the pipe 101.

The second fixing member 220B is disposed to be symmetrical with respect to the first fixing member 220A. The second fixing member 220B is interposed between the other side of the inner surface of the reference member 210 and the outer surface of the other pipe 102. Preferably, the inner surface of the second fixing member 220B is fixed to the outer surface of the other pipe 102.

Fig. 24 is a cross-sectional view showing the pipe connecting apparatus in accordance of a third embodiment of the present invention. As shown in the drawing, the pipe connecting apparatus 100 according to the embodiment of the present invention includes the reference member 210, a first fixing member 220A and a second fixing member 220B.

In the embodiment, the inner surface of the first fixing member 220A is fixed to an end of one pipe 101 along the outer surface thereof in a thermal welding method.

The outer surface of the first fixing member 220A is fixed at a center portion of the inner surface of the reference member 210 toward the pipe 101 in an electric heat welding method.

On the other hand, the inner surface of the second fixing member 220B is fixed to an end of the other pipe along the outer surface thereof in a thermal welding method. The outer surface of the second fixing member 220B is fixed at a center portion of the inner surface of the reference member 210 toward the other pipe 102 in an electric heat welding method.

Herein, since the electric heat welding method is the same as in the second embodiment, its description will be omitted. A reference numeral A is a thermal-welded portion, and B is an electric heat-welded portion.

In the embodiment, since fine clearances between the reference member 210 and the first and second fixing members 220A and 220B are completely sealed by the thermal welding and the electric heat welding, it is surely prevented that fluid flowing through the pipes 101 and 102 is leaked to the outside.

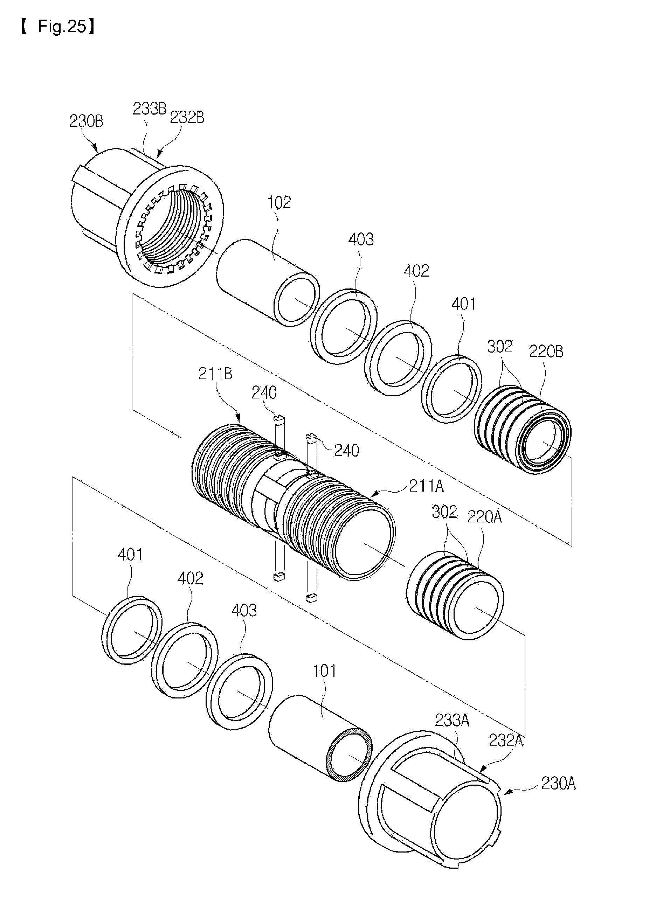

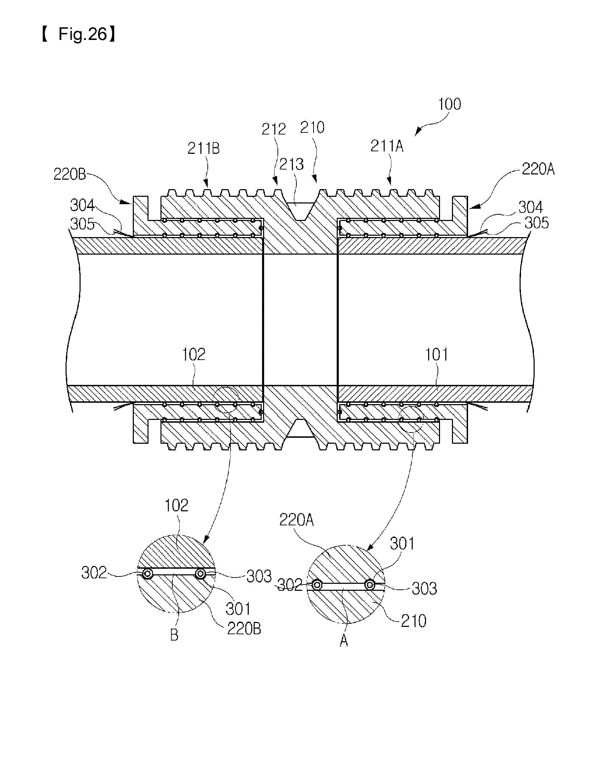

Fig. 25 is an exploded perspective view showing another type of the pipe connecting apparatus in accordance with the third embodiment of the present invention, and Fig. 26 is a cross-sectional view of the assembled pipe connecting apparatus of Fig. 25.

As shown in Figs. 25 and 26, the pipe connecting apparatus 100 according to the embodiment of the present invention includes a reference member 210 and a first fixing member 220A and a second fixing member 220B.

And the inner surface of the first fixing member 220A is fixed to an end of one pipe 101 along the outer surface thereof in a thermal welding method, and the outer surface of the first fixing member 220A is fixed at a center portion of the inner surface of the reference member 210 toward the pipe 101 in an electric heat welding method. The inner surface of the second fixing member 220B is fixed to an end of the other pipe along the outer surface thereof in a thermal welding method, and the outer surface of the second fixing member 220B is fixed at a center portion of the inner surface of the reference member 210 toward the other pipe 102 in an electric heat welding method. Herein, since the electric heat welding method is the same as in the second embodiment, its description will be omitted.

The embodiment of the present invention further includes a first coupling member 230A and a second coupling member 230B which are respectively screwed to both sides of the reference member 210.

Preferably, the first and second coupling members 230A and 230B are rotatably disposed to be coupled with both sides of the reference member 210 in a state of being caught by the packing means 401, 402 and 403 that are respectively fixed to the outer surfaces of the pipes 101 and 102.

Each of the first and second coupling members 230A and 230B includes a screw portion 231A and 231B that is formed at an inner surface of each of the first and second coupling members 230A and 230B so as to be screwed to the screw portion 211A and 211B of the reference member 210, and an operating portion 232A, 232B which is grasped and rotated by a user's hand so as to apply a rotational pressure when they are coupled with the reference member 210.

Preferably, a grasping protrusion 213, 233A, 233B is formed at each operating portion 212, 232A, 232B of the reference member 210 and the first and second coupling members 230A and 230B so as to apply the rotational pressure.

In order to maintain the caught state by the packing means 401, 402 and 403, a catching protrusion 234A, 234B is formed at an end of each of the first and second coupling members 230A and 230B corresponding to the operating portion 232A, 232B.

In order to prevent the reference member 210 and the first and second coupling members 230A and 240B from being released from each other, a locking key 240 is provided at an outer surface of the reference member 210, and a locking protrusion (not shown) is formed at an upper end of an outer surface of each of the first and second coupling members 230A and 240B so as to maintain a locked state with the locking key 240.

Fourth embodiment

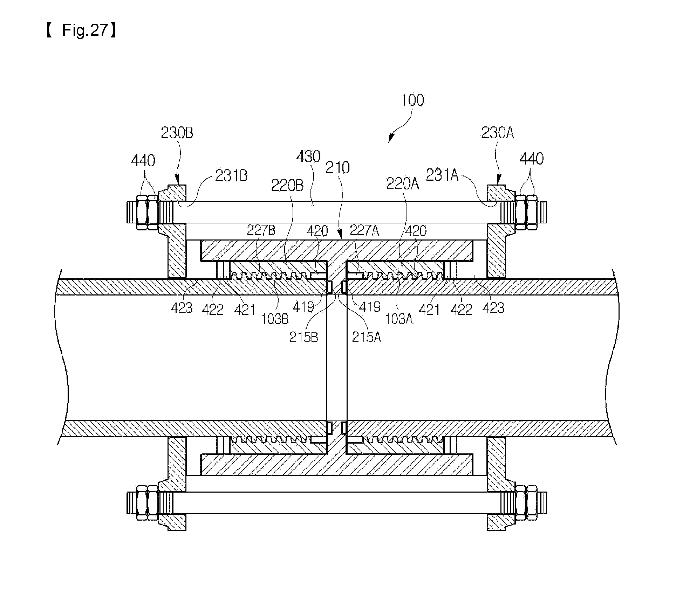

Fig. 27 is a cross-sectional view showing the pipe connecting apparatus in accordance with a fourth embodiment of the present invention. As shown in the drawing, the pipe connecting apparatus 100 according to the embodiment of the present invention includes a reference member 210 and a first fixing member 220A and a second fixing member 220B.

In the embodiment, the inner surface of the first fixing member 220A is screwed to the outer surface of one pipe 101, and the outer surface of the first fixing member 220A is contacted with one side of the inner surface of the reference member 210.

Preferably, in order for the first fixing member 220A to be screwed to the pipe 101, a screw portion 103A, 227A is formed at each of the inner surface of the first fixing member 220A and the outer surface of the pipe 101.

And the inner surface of the second fixing member 220B is screwed to the outer surface of the other pipe 102, and the outer surface of the second fixing member 220B is contacted with the other side of the inner surface of the reference member 210.

Preferably, in order for the second fixing member 220B to be screwed to the other pipe 102, a screw portion 103B, 227B is formed at each of the inner surface of the second fixing member 220B and the outer surface of the other pipe 102.

In the embodiment, it is preferable that rubber rings 419 as packing means for sealing are provided between one side of the reference member 210 and the pipe 101, and between the other side of the reference member 210 and the other pipe 102.

The arrangement of the rubber rings 419 is as follows:

Firstly, some of the rubber rings 419 are inserted into a groove 215A formed at one side of a center portion of the inner surface of the reference member 210 so as to be contacted with one pipe 101.

The rest of the rubber rings 419 are inserted into a groove 215B formed at the other side of a center portion of the inner surface of the reference member 210 so as to be contacted with the other pipe 102.

The embodiment further includes first and second coupling members 230A and 230B which are respectively provided at both sides of the reference member 210 and connected by a long type coupler 430.

The first and second coupling members 230A and 230B respectively have a coupling hole 231A, 231B, in which the long type coupler 430 is inserted, so as to be connected with each other by the long type coupler 430 in a state of supporting the packing means 421, 422 and 423 fixed to the outer surfaces of the pipes 101 and 102.

Preferably, the coupler 430 is a long bolt which is longer than a distance between the first and second coupling members 230A and 230B.

Preferably, when the packing means 421, 422 and 423 and the first coupling member 230A are arranged at one end of the reference member 210, and the packing means 421, 422 and 423 and the second coupling member 230B are arranged at the other end of the reference member 210, one or more nuts 440 are coupled to both ends of the bolt 430 so as to maintain the coupled state between the packing means 421, 422 and 423 and the first and second coupling members 230A and 230B in a state that the bolt 430 is inserted into the coupling holes 231A and 231B of the first and second coupling members 230A and 230B.

Preferably, the coupling holes 231A and 231B of the first and second coupling members 230A and 230B are respectively arranged at the same angle with respect to a center point of each circumference of the pipes 101 and 102.

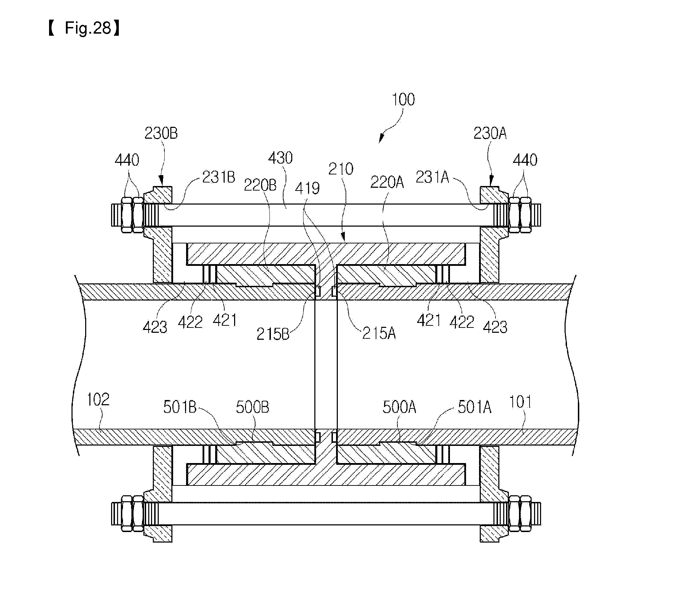

Fig. 28 is a cross-sectional view showing another type of the pipe connecting apparatus in accordance with the fourth embodiment of the present invention. This embodiment is modified from the fourth embodiment, and the pipe connecting apparatus 100 of the embodiment includes the reference member 210 and the first and second fixing members 220A and 220B.

In the embodiment, unlike the fourth embodiment, a convex portion 500A is formed at the inner surface of the first fixing member 220A, and a concavo portion 501A corresponding to the convex portion 500A is formed at one pipe 101 so that the convex portion 500A is inserted into the concavo portion 501A.

Preferably, the outer surface of the first fixing member 220A is closely contacted with the inner surface of the reference member 210 so that a clearance is not generated therebetween.

Meanwhile, a convex portion 500B is formed at the inner surface of the second fixing member 220B, and a concavo portion 501B corresponding to the convex portion 500B is formed at the other pipe 102 so that the convex portion 500B is inserted into the concavo portion 501B.

And it is preferable that the outer surface of the second fixing member 220B is closely contacted with the inner surface of the reference member 210 so that a clearance is not generated therebetween.

However, in the embodiment, the concavo portion 501A, 501B may be formed at the inner surface of the second fixing member 220B, and the convex portion 500A, 500B may be formed at the pipes 101 and 102.

If the first and second coupling members 220A and 220B are coupled to the pipes 101 and 102 by using the concavo-convex portions, it is possible to obtain the same effect without the screw portion 103A, 227A, 103B, 227B and the key 420 used in the first and second embodiments.

Fifth embodiment

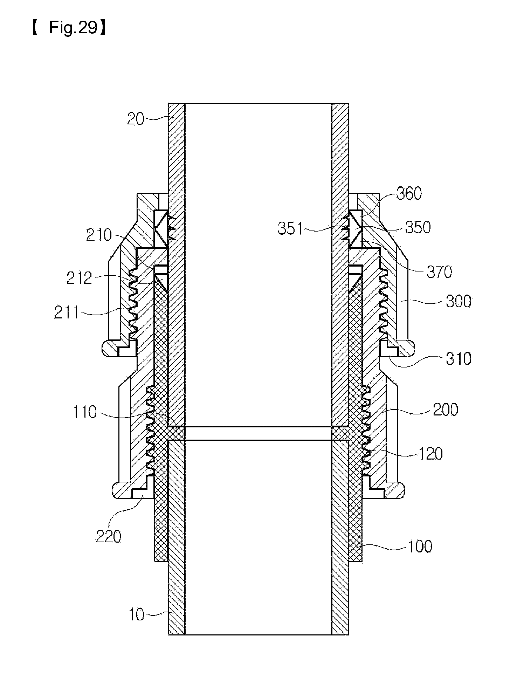

Fig. 29 is a cross-sectional view showing the pipe connecting apparatus in accordance with a fifth embodiment of the present invention. The pipe connecting apparatus according to the embodiment of the present invention includes a reference member 100, a first fixing member 200 and a second fixing member 300.

On the basis of a short projection 110 formed at the inner surface of the reference member 100, a first pipe 10 is inserted into one side of the reference member 100 and a second pipe 20 is inserted into the other side thereof. The first pipe 10 may be fixedly welded at the inner surface of the reference member 100. Meanwhile, screw threads are formed on the outer surface of the reference member 100 at regular intervals. Further, an inclined surface is formed at one end of the reference member 100 in order to enhance the water tightness when being coupled with the first fixing member 200, and packing means 210, 212 is interposed between the inclined surface and the first fixing member 200. The packing means may be a triangular rubber ring 212 and a rectangular packing 212.

The screw threads are formed on the inner surface of the first fixing member 200 so that the first fixing member 200 is screwed to the reference member 100. Screw threads 211 are also formed at regular intervals on the outer surface of one end of the first fixing member 200, and a pattern portion (not shown) is formed on the outer surface of the other end of the first fixing member 200 so as to be facilely grasped and rotated by a user. The pattern portion may be protrusions or slots having various shapes.

The second fixing member 300 is positioned at an outside of the second pipe 20 passing through the second fixing member 300. The second fixing member 300 is screwed to the first fixing member 200 through the screw threads 211 of the first fixing member 200. A fixing means is interposed between the second fixing member 300 and the second pipe 20. The fixing means includes at least one stopper 350 for preventing the second pipe 20 from being separated and a plurality of contacting members for closely contacting the stopper 350 to the pipe. The contacting member may include a ring 360, 370 formed of an acetylene material having a desired strength. Meanwhile, a reverse rotation preventing member 220, 310 may be further provided so as to prevent the reference member 100, the first fixing member 200 and the second fixing member 300 from being released.

The pipe connecting apparatus as described above functions to insert the first and second pipes 10 and 20 on the basis of the short protrusion 110 of the reference member 100 and then fix them. The first pipe 10 is fusion-welded to one side of the reference member 100, and the second pipe 20 is fixed by the fixing means.

As the described above, the fixing means functions to prevent the second pipe 20 from being separated to the outside by that the stopper 350 having a protrusion is fixed to the outer surface of the second pipe 20. At this time, the fixing means is located in the second fixing member 300, and thus the contacting force and the fixing force of the fixing means are increased by screw coupling of the second fixing member 300 and the first fixing member 100.

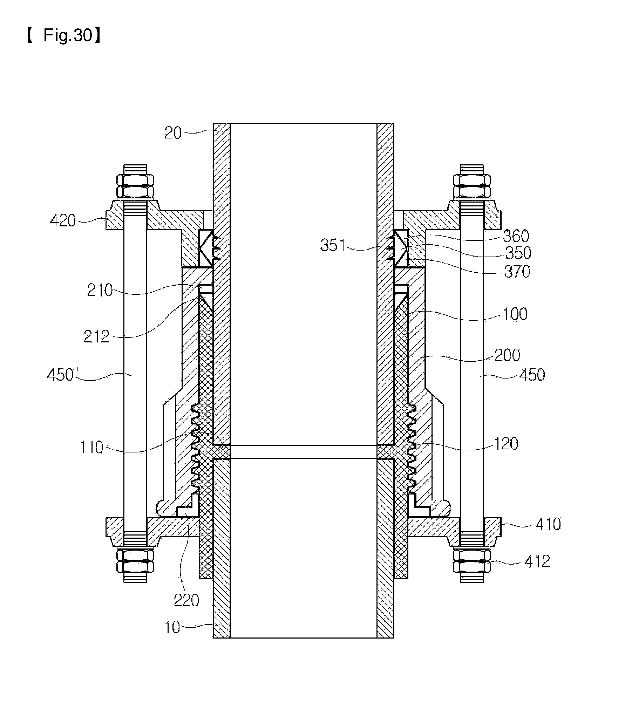

Fig. 30 is a cross-sectional view showing another type of the pipe connecting apparatus in accordance with the fifth embodiment of the present invention, wherein the reference member 100 and the first fixing member 200 have the same shape and position as in the foregoing embodiment. However, in the embodiment, an upper flange portion 420 and a lower flange portion 410 are respectively fixed to upper and lower ends of the first fixing member 200. Further, a plurality of long bolts 450 and 450' are provided in the circumferential direction thereof between the upper and lower flange portions 420 and 410 and then fastened by a nut 412. The stopper 350 may be disposed between the upper flange portion 420 and the second pipe 20.

Thus, the stopper 350 disposed at the upper flange portion 420 functions to fix the outer surface of the pipe, thereby preventing the separation of the second pipe 20, and the first pipe 10 is inserted at a lower end of the reference member 100 and then fixedly fusion-welded. As described above, since a distance between the upper and lower flange portions 420 and 410 can be adjusted by the long bolt 450, 450' and the nut 412, it is possible to improve the water tightness.

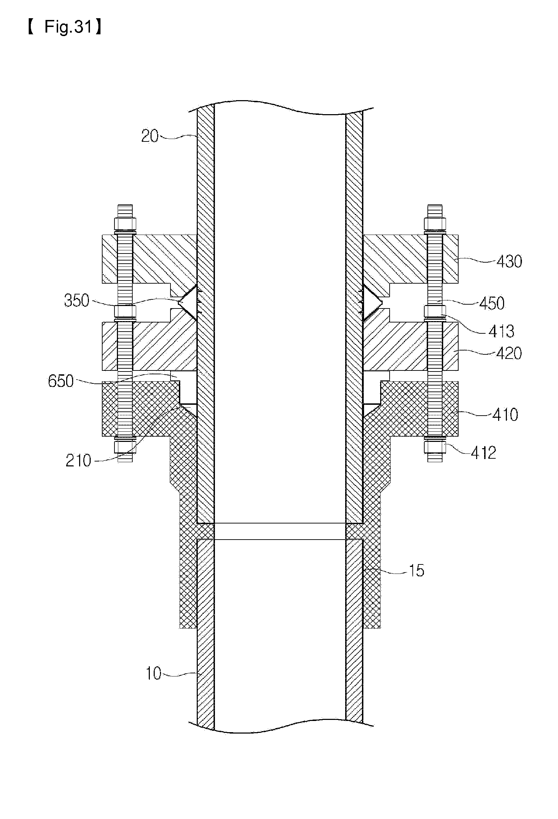

Fig. 31 is a cross-sectional view showing yet another type of the pipe connecting apparatus in accordance with the fifth embodiment of the present invention. In the embodiment, the first pipe 10 is fusion-welded at the first flange portion 410, and the second pipe 20 is fixed by the stopper 350 and the flange portions 430 and 420.

In other words, the stopper 350 disposed between the second flange portion 420 and the third flange portion 430 can be fixed by closely contacting the second and third flange portions 420 and 430 using the long bolt 450. Particularly, a middle nut 413 is provided at the long bolt 450 so as to closely contact the second flange portion 420 and the first flange portion 410 using the middle nut 413. At this time, a fastening ring 650 and a rubber packing 210 may be inserted into the first flange portion 410, and the rubber packing 210 may be formed into various shapes such as a triangular ring and a rectangular ring.

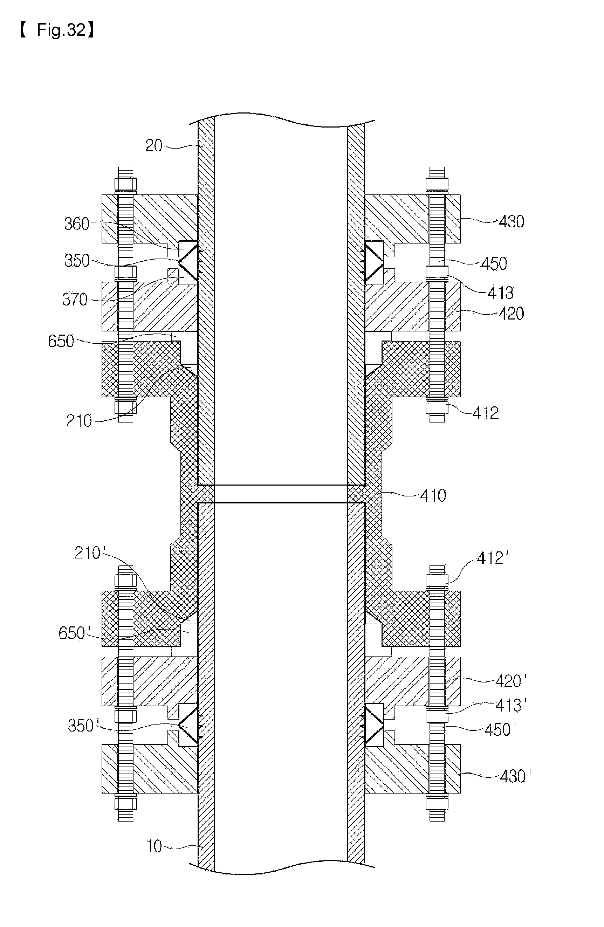

Fig. 32 is a cross-sectional view showing yet another type of the pipe connecting apparatus in accordance with the fifth embodiment of the present invention. All of the fixing methods described in the forgoing embodiment can be applied to the first and second pipes 10 and 20. That is, since the second flange portion 420, 420' and the third flange portion 430, 430' are respectively disposed at both sides of the first flange portion 410, and then the long bolt 450, 450' is provided, it is possible to fix the pipes 10 and 20 through the stopper 350, 350'.

Since the present invention is provided with the packing means as described above, it is possible to prevent a leakage of water, although the connecting portion of the pipes may be corroded, or the connecting apparatus may be loosened.

Further, since the present invention provides the pipe connecting apparatus having the above-mentioned structures, it is possible to prevent the loosening of the connecting portion and thus maintain the initial coupling state of the pipes.

While the present invention has been described with respect to the specific embodiments, it will be apparent to those skilled in the art that various changes and modifications may be made without departing from the spirit and scope of the invention as defined in the following claims.

## Claims

1. A packing means for sealing, comprising:
a base ring member which is inserted onto an outer surface of a pipe and of which an outer surface is formed with an upper inclined surface that is inclined upward and a lower inclined surface that is inclined downward;
an upper ring member which is formed with an internal inclined surface to be closely contacted with the upper inclined surface of the base ring member; and
a lower ring member which is formed with an internal inclined surface to be closely contacted with the lower inclined surface of the base ring member;
wherein the base ring member has a projection line at the inner surface thereof so as to be not slide on an outer surface of the pipe but fixed thereon when the base ring member is closely contacted with the upper and lower ring member at the same time when being rotated by external force, and also has a rib line which is formed to traverse the projection line so that a depth that the projection line is struck into the outer surface of the pipe is restricted, and
the projection line is formed into a spiral or oblique-toothed structure so as to be struck in a desired depth into the outer surface of the pipe toward the lower ring member corresponding to the upper ring member.

2. The packing means of claim 1, wherein a surface of the base ring member contacted with the external force is formed into a shape corresponding to a means for providing the external force, or formed of a material having viscosity with respect to the means for providing the external force.

3. The packing means of claim 1, wherein a part of the base ring member has a cut-off portion so as to be radially shrunk and closely contacted with the outer surface of the pipe.

4. The packing means of claim 1, further comprising a supplementary ring for controlling a tolerance and a reinforcement ring which are provided in turn at the outer surface of the pipe.

5. A pipe connecting apparatus, comprising:
a first coupling member which is coupled to an end of a first pipe and
a second coupling member which is coupled to an end of a second pipe so as to connect the first and second pipes,
wherein the first coupling member has a screw portion which is formed at an outer surface thereof to be screwed with the second coupling member, and an operating portion which is formed at a rear side of the screw portion and grasped and rotated by a user's hand so as to apply a rotational pressure when the first coupling member is coupled with the second coupling member, and
the second coupling member has a screw portion which is formed at an inner surface thereof to be screwed with the first coupling member and an operating portion which is grasped and rotated by a user's hand so as to apply a rotational pressure when the first coupling member is coupled with the second coupling member, and
the second coupling member is rotatably disposed to be coupled with the first coupling member in a state of being caught by a sealing means fixed to the second pipe as the packing means according to any one of claims 1 to 4, and
when the second coupling is rotated, the packing means receives rotational force through surface contact with the inner surface of the second coupling member to be rotated by a desired angle in the same direction as a rotational direction of the second coupling member and then fixed to the outer surface of the second pipe.

6. The pipe connecting apparatus of claim 5, wherein each of the operating portions a grasping protrusion for applying the rotational pressure to each coupling member.

7. The pipe connecting apparatus of claim 6, wherein the second coupling member has a catching protrusion which is formed at an end of the second coupling member corresponding to the operating portion so as to maintain a caught state by the packing means fixed to the end of the second pipe.

8. The pipe connecting apparatus of claim 7, wherein a locking key is provided at an outer surface of the first coupling member so as to prevent the first and second coupling members from being released from each other, and a locking protrusion is formed at an upper end of an outer surface of the second coupling member so as to maintain a locked state with the locking key.

9. The pipe connecting apparatus of claim 8, wherein the locking key comprises a sliding surface which allows the locking protrusion to be slidingly rotated in a locking direction when the first and second coupling members are coupled to each other, and a catching surface which is formed at a position corresponding to the sliding surface to prevent rotation of the locking protrusion.

10. The pipe connecting apparatus of claim 9, wherein the first coupling member has a fitting groove at a boundary portion of the operating portion and the screw portion so that the locking key is fixedly inserted therein.

11. The pipe connecting apparatus of claim 10, wherein the locking key comprises a '⊏'-shaped elastic portion that is formed at a lower side of the sliding surface and the catching surface so as to be inserted into the fitting groove, and a pushing portion that is formed at an upper side of the sliding surface and the catching surface so as to press the elastic portion and release a caught state of the locking protrusion and the catching surface.

12. A pipe connecting apparatus for connecting pipes corresponding to each other, comprising:
a reference member of which an inner surface is fixed to an outer surface of one pipe in a thermal welding method and an outer surface is formed with a screw portion, and which has an operating portion formed to be adjacent to the screw portion;
a fixing member which is interposed between the inner surface of the reference member and an outer surface of the other pipe, and of which an inner surface is fixed to the outer surface of the other pipe; and
a coupling member which is rotatably disposed to be coupled with the reference member in a state of being caught by a packing means according to any one of claims 1 to 6,
wherein the coupling member comprises a screw portion which is formed at an inner surface thereof to be screwed with the screw portion of the reference portion, and an operating portion which is formed at an outer surface thereof and grasped and rotated by a user so as to apply a rotational pressure when being coupled with the reference member.

13. The pipe connecting apparatus of claim 12, wherein the inner surface of the fixing member is fixed to an end of the other pipe along the outer surface thereof in a thermal welding method, and an outer surface of the fixing member is fixed at a center portion of the inner surface of the reference member toward the other pipe in an electric heat welding method.

14. A pipe connecting apparatus for connecting pipes corresponding to each other, comprising:
a reference member which has a symmetrical shape with respect to a connecting portion of the pipes and of which an outer surface is formed to be flat;
a first fixing member which is interposed between one side of an inner surface of the reference member and an outer surface of one pipe, and of which an inner surface is fixed to the outer surface of the pipe; and
a second fixing member which is disposed to be symmetrical with respect to the first fixing member and interposed between the other side of the inner surface of the reference member and an outer surface of the other pipe, and of which an inner surface is fixed to the outer surface of the other pipe; and
first and second coupling members which are respectively provided at both sides of the reference member to be connected by a long type coupler,
wherein an inner surface of the first fixing member is fixed to an end of one pipe along the outer surface thereof in a thermal welding method, and an outer surface of the first fixing member is fixed at a center portion of the inner surface of the reference member toward one pipe in an electric heat welding method, and
an inner surface of the second fixing member is fixed to an end of the other pipe along the outer surface thereof in a thermal welding method, and an outer surface of the second fixing member is fixed at a center portion of the inner surface of the reference member toward the other pipe in an electric heat welding method, and
the first and second coupling members has a coupling hole, in which the long type coupler is inserted, so as to be connected with each other by the long type coupler in a state of supporting the packing means fixed to the outer surfaces of the pipes according to any one of claims 1 to 4.

15. The pipe connecting apparatus of claim 14, wherein a concavo or convex portion is formed at the inner surface of the first fixing member, and a corresponding portion is formed at one pipe so that the concavo or convex portion is inserted onto or into the corresponding portion, and the outer surface of the first fixing member is contacted with the inner surface of the reference member, and
a concavo or convex portion is formed at the inner surface of the second fixing member, and a corresponding portion is formed at the other pipe so that the concavo or convex portion is inserted onto or into the corresponding portion, and the outer surface of the second fixing member is contacted with the inner surface of the reference member

16. A pipe connecting apparatus for connecting pipes corresponding to each other, comprising:
a reference member in which each pipe is inserted into each end thereof and of which an outer surface is formed with screw threads;
a first fixing member which is screwed with the reference member; and
a second fixing member for fixing the reference member and the pipes,
wherein a packing means according to any one of claims 1 to 6 is interposed between the reference member and the first fixing member, and
the second fixing member comprises a pair of flange portions which are respectively disposed at both ends of the first fixing member, and a coupling portion is formed at each edge of the flange portions so that the flange portions is coupled to each other by a long bolt.

17. The pipe connecting apparatus of claim 16, wherein a stopper having at least one protrusion for preventing the pipes from being separated is provided at an inside portion of the second fixing member.
